Europäisches Patentamt

European Patent Office

Office européen des brevets

(19)

(11) EP 1 489 830 B1

(12) **EUROPEAN PATENT SPECIFICATION**

(45) Date of publication and mention
of the grant of the patent:
**22.11.2006 Bulletin 2006/47**

(51) Int Cl.:
**H04N 1/40** (2006.01)

(21) Application number: **04076706.3**

(22) Date of filing: **10.06.2004**

(54) **Method and apparatus for generating a halftoned image from a compressed image**

Verfahren und Vorrichtung für das Erzeugen eines halbtongerasterten Bildes von einem komprimierten Bild

Procédé et appareil pour la génération d'images en demi-teintes D'IMAGE COMPRESSées

(84) Designated Contracting States:
**AT BE BG CH CY CZ DE DK EE ES FI FR GB GR HU IE IT LI LU MC NL PL PT RO SE SI SK TR**

(30) Priority: **16.06.2003 EP 03291446**

(43) Date of publication of application:
**22.12.2004 Bulletin 2004/52**

(73) Proprietor: **Océ-Technologies B.V.**
**5914 CC Venlo (NL)**

(72) Inventors:
• **Sibade, Cédric**
**94140 Alfortville (FR)**
• **Berche, Stéphane**
**75005 Paris (FR)**

(74) Representative: **Van de Sande, Jacobus et al**
**Océ-Technologies B.V.,**
**Corporate Patents,**
**P.O. Box 101**
**5900 MA Venlo (NL)**

(56) References cited:
**EP-A- 0 525 981          EP-A- 1 102 209**
**WO-A-00/59209          US-B1- 6 584 225**

• **LEE B-Y ET AL: "A new optimal digital halftoning technique based on the discrete cosine transform" SIGNAL PROCESSING, AMSTERDAM, NL, vol. 80, no. 12, December 2000 (2000-12), pages 2617-2621, XP004237878 ISSN: 0165-1684**

EP 1 489 830 B1

**Description**

The invention relates to a method of generating a halftoned image from an image compressed by a domain transformation yielding coefficients for resulting domain components and by a coding operation by which said coefficients are coded, comprising a decoding operation by which decoded coefficients ($y_p$) are obtained and a thresholding operation by which a bitmap is obtained.

Image compression technology offers valuable solutions to the problems of high storage or transmission costs. It is widely used in the areas of scanners, printers, facsimile, desktop publishing, medical imaging, graphic arts and many others continuous-tone or colour image applications. As a result of compression, the stream of data becomes shorter, it is better transferred, stored and managed. Many compression algorithms exist, like for example TIFF CCITT, JBIG and JPEG. JPEG (Joint Photographic Experts Group) has developed a general-purpose compression standard that meets the needs of many continuous-tone image applications. A detailed description is available in Communications of the ACM, 34, p 31 (1991), by G. K. Wallace. JPEG is based on compression of an image converted firstly in the frequency domain. Source image samples are first grouped in 8x8 blocks. Then the input raw pixel representation is modified, using for example a frequency domain transform like the Discrete Cosine Transform (DCT). So-called DCT coefficients are obtained, which coefficients can be regarded as the relative amounts of the 2D spatial frequencies contained in the 64-point input signal. The coefficient with zero frequency in both dimensions is called the 'DC coefficient' while the remaining 63 coefficients are called the 'AC coefficients'. The DCT coefficients are then quantised, i.e. each DCT coefficient is divided by its corresponding quantiser step size, followed by rounding to the nearest integer. The goal of this operation is to discard information which is not visually significant. This is the reason why quantisation is fundamentally 'lossy'. It is convenient to order the DCT coefficients in a zigzag sequence of an 8x8 array. In this zigzag sequence, the DC coefficient is coefficient with an index 0 and the higher frequency coefficients have a higher index. This ordering facilitates the next step of compression, being entropy coding, by placing the low-frequency coefficients before the high-frequency coefficients. The step of entropy coding achieves efficient compression by encoding the DCT coefficients more compactly based on their statistical characteristics. Examples of entropy coding methods are the Huffman coding and arithmetic coding.

A benefit from compressed-domain image processing is the ability to decrease the requirements in terms of processing power. When wide formats documents have to be printed, an operation that can be quite time-consuming is the halftoning step due to the large amount of data. In order to perform a print of a compressed image, for example compressed in the JPEG format, the encoded data first have to be decoded. This can be done using a Huffman decoder, by which decoded DCT coefficients are obtained. This operation is followed by a de-quantisation step. In order to retrieve the input pixel values, an inverse Discrete Cosine Transform is carried out. Halftoning, being the process of rendering colour or grey-scaled images into bitmaps, i.e. images which pixel values can only have two possible levels (print a dot or do not print a dot), can be performed on these retrieved input pixel values. Examples of well-known halftoning methods are the error diffusion method, and the masking method. In the latter case, the halftoning operation is a simple thresholding of an image with a mask that can have different threshold values which are organised in a matrix array. For the sake of efficiency, however, the image processing operations have to be adapted to be performed on the compressed stream of data. This is particularly relevant for wide format documents, because the gain in processing time may be significant.

An image processing operation performed on the compressed stream of data is disclosed for example in WO 94/22108. According to the method of generating thumbnail or reduced size images disclosed in that document, the images are generated based on the DC values of the DCT coefficients. A Huffman decoder is used to decode the compressed image data, by which quantised DCT coefficients are generated. The steps of de-quantisation and of inverse DCT on the AC coefficients are skipped. Only DC coefficients are used to generate an image having a reduced size. With other words, the thumbnail image is built out of the DC values of each 8x8 block. The process time needed to render the image is reduced, and the user is enabled to quickly browse various images. This method, however, when applied to generating a halftoned image from a compressed image, has the disadvantage that the quality of the rendered details in the printed image is much too low and does not meet the requirements of the user.

The present invention seeks to provide a method of generating a halftoned image from an image compressed by a domain transformation in which these problems are mitigated. The method according to the invention is characterised in that only decoded coefficients ($y_p$) verifying a selection criterion are taken into account in the thresholding operation as defined in claim 1.

The main benefit of the method of generating a halftoned image from an image compressed by a domain transformation according to the invention is that a rapid halftoning can be obtained while the visual quality of the halftoned image is good. The halftoning operation is relatively rapid because not all decoded coefficients are taken into account in the thresholding operation. The visual aspect of the halftone image when printed is satisfying and details are rendered properly since the result of the thresholding operation is essentially the same as it would be when all decoded coefficients were taken into account.

The invention particularly provides a method of generating a halftoned image from a compressed image wherein

the decoded coefficients ($y_p$) are discrete cosine transform (DCT) coefficients. This embodiment according to the invention is particularly interesting because, in the case of JPEG compression, the most important part of the processing is performed in the Discrete Cosine Transform. If such a JPEG compressed image had to be fully uncompressed, the step of inverse Discrete Cosine Transform would have to be performed. According to the invention, the step of transforming the decoded coefficients ($y_p$) back into input pixels is skipped. When the decoded coefficients ($y_p$) are DCT coefficients, generating a halftone image will effectively benefit from skipping the inverse DCT and processing time will be gained.

According to one aspect of the present invention, the decoded coefficients ($y_p$) selected for the thresholding operation are the DC coefficient ($y_0$) and only the AC coefficients in absolute value equal to or larger than a pre-determined value LIM. The DC coefficient $y_0$ is important since it gives the mean tone of a block of input pixels. Some AC coefficients ($y_p$) do not change significantly the result of the thresholding operation performed to obtain a halftoned image. A pre-determined value LIM is the lowest boundary for the absolute value of the AC coefficients ($y_p$) that are taken into account for the thresholding operation. Each of the coefficients ($y_p$) equal to or larger in absolute value than LIM may have a significant influence on the result of the thresholding operation.

It is preferred that elements used in the thresholding operation are pre-calculated. Then, even more processing-time can be gained.

In one embodiment of the method of generating a halftoned image from an image compressed by a domain transformation according to the invention, the decoded coefficients ($y_p$) selected for the thresholding operation are amplified by a factor $\alpha$. This leads to a lowering of the noise that may be created by the halftoning operation. In particular, edges are enhanced and noisy lines can be avoided.

The invention also relates to an apparatus for generating a halftoned image from an image compressed by a domain transformation yielding coefficients for resulting domain components and by a coding operation by which said coefficients are coded, comprising a decoder for performing a decoding operation by which decoded coefficients ($y_p$) are obtained and a halftoning module for performing a thresholding operation by which a bitmap is obtained, the apparatus being provided with a memory for storing a digital compressed image and a processing unit for processing digital data, wherein the halftoning module performs the thresholding operation in accordance with the method of the invention.

The invention further relates to a computer program with a program code for generating a halftoned image from an image compressed by a domain transformation in accordance with the method of the invention.

The invention relates also to a printer provided with a network connection unit for receiving externally generated print orders, a processing unit for processing digital image data and a printing unit, characterised in that the processing unit is provided with an apparatus wherein the method of generating a halftoned image from an image compressed by a domain transformation according to the invention is applied.

The invention will now be explained with reference to the following exemplified embodiment of the present invention, and illustrated by reference to the drawings. This embodiment serves to illustrate the invention and should not be regarded as a limitation thereof.

Fig. 1 is illustrating a typical compression and decompression framework (state of the art)
Fig. 2 is a flow diagram for a method of generating a haltoned image according to an embodiment of the invention
Fig. 3 is a block diagram of a digital printer usable in the present invention.

An embodiment of the method of generating a halftoned image from an image compressed by a domain transformation is explained hereinafter for a continuous tone image, like a grey level image. It is also possible to apply this method in order to halftone a compressed colour image. When the colour image is to be printed by a colour printer, like an ink-jet printer using a number colorants (for example black, cyan, magenta and yellow in the form of ink), the corresponding halftoned image is characterised by the same number of colour planes. Each colour plane is a continuous-tone image and is independently transformed into a bitmap using the method described hereinafter. To avoid artefacts and Moiré patterns, different masks should be used for each colour component and different orientations have to be given to these masks.

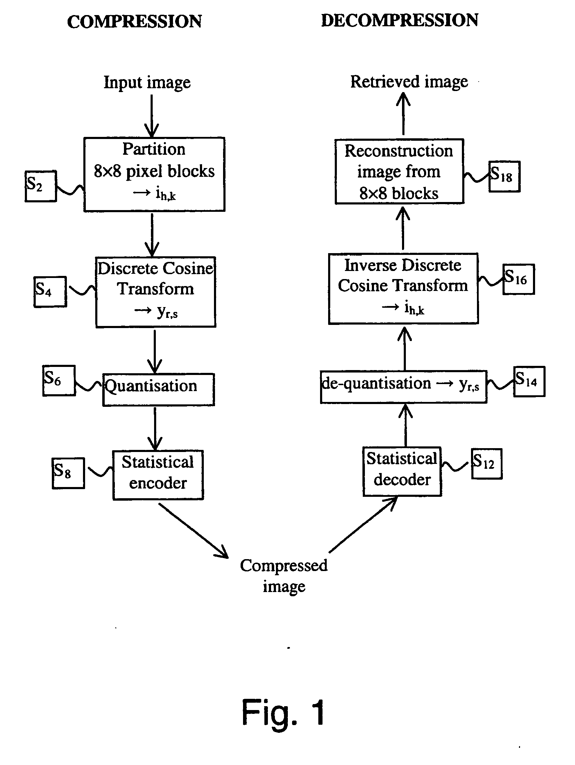

First, the general framework of compression and decompression of an image is given. The principles of compression and decompression are summarised in Fig. 1 (state of the art). At the input of a compression algorithm, the source image samples are grouped into 8x8 blocks ($S_2$), representing for example pixels values within the range [$-2^{N-1}$, $2^{N-1}-1$] (signed integers). Such an 8x8 block is a matrix I with 64 coefficients $i_{h,k}$, with h taking the integer values 0, ..., 7 and k taking the integer values 0, ..., 7. The following step ($S_4$) of a compression algorithm is for example a Discrete Cosine Transform (DCT) by which the coefficients $i_{h,k}$ are transformed into coefficients $y_{r,s}$. according to the following equation:

$$y_{r,s} = \frac{1}{4} C(r) \, C(s) \sum_{h=0}^{7} \sum_{k=0}^{7} \cos\left(\frac{(2h+1)r}{16}\pi\right) \cos\left(\frac{(2k+1)s}{16}\pi\right) i_{h,k} \qquad (1)$$

with $C(r)$, $C(s) = \dfrac{1}{\sqrt{2}}$ for r, s=0 and $C(r)$, $C(s)=1$ otherwise

Each of the 64 DCT coefficient $y_{r,s}$, forming the matrix **Y**, contains one of the 64 unique two-dimensional spatial frequencies of which the input signal's spectrum is made. The DCT coefficient with zero frequency in both dimensions is called the DC coefficient. The remaining 63 DCT coefficients are called the AC coefficients. The quantisation step ($S_6$) aims at discarding information which is not visually significant. Quantisation is a many-to-one mapping and it is therefore fundamentally 'lossy'. To perform quantisation, a 64-element quantisation matrix **Q** having coefficients $q_{r,s}$ must be specified by the application. The highest frequency components contain the fine details of the image, to which the human vision is generally less sensitive. The highest frequency components can therefore be quantised more coarsely than the other components without significant degradation of the image quality. The quantisation operation is performed on the DCT coefficients $y_{r,s}$. A quantised 8x8 block of $y_{r,s}^{q}$ coefficients is obtained by dividing each of the DCT coefficients by its corresponding quantiser step size $q_{r,s}$, followed by rounding to the nearest integer:

$$y_{r,s}^{q} = \text{Integer Round}\left(\frac{y_{r,s}}{q_{r,s}}\right) \qquad (2)$$

This quantisation stage is fundamentally 'lossy' due to the rounding operation. The index q, indicating that the coefficients have been quantised, may now be left out, keeping in mind that the coefficients may however be quantised.
The next step to be performed when compressing an image is the step of entropy coding (see $S_8$ in Fig. 1). In order to facilitate this coding, the coefficients $y_{r,s}$ are ordered into a zigzag sequence by placing the low-frequency coefficients, being more likely to be nonzero, before high-frequency coefficients. The DCT coefficient with zero frequency (r=0; s=0) in both dimensions is called the DC coefficient and the remaining coefficients of the block are called the AC coefficients. The DC coefficient is proportional to the mean value of the block $i_{k,h}$. As r and s are increasing in both dimensions the cosine frequency is also increasing. Now that the $y_{r,s}$ are ordered in a zigzag sequence, a single index p, rather than (r,s) can be used for the DCT coefficients, expressed as ($y_p$) with p=0, ..., 63. In this notation, $y_0$ is the DC coefficient. The notation $y_p$ is equivalent to the notation $y_{r,s}$.
Entropy coding ($S_8$) leads to compression by encoding the DCT coefficients more compactly based on their statistical characteristics. Examples of entropy coding methods are the Huffman coding and the arithmetic coding. These methods are specified by the JPEG proposal. Encoding basically assigns codewords with a variable size in function of the occurrence frequency of the symbol. Huffman coding requires tables to be specified by the application. The compressed file has for example a format in accordance with the JPEG proposal.
A general decompression algorithm is also indicated in Fig. 1, and comprises the steps of decoding ($S_{12}$), de-quantisation ($S_{14}$), inverse Discrete Cosine Transform ($S_{16}$) and reconstruction of the image ($S_{18}$). The same tables used to compress an image are needed to decompress it, using for example using a Huffman decoder ($S_{12}$). Since the ($y_p$) coefficients had been quantised in a compression framework, a de-quantisation operation ($S_{14}$) has to be performed in order to obtain the non-quantised coefficients. The de-quantisation operation is performed according to the following equation:

$$y_p = y_{r,s}^{q} \, q_{r,s} \qquad (3)$$

In order to retrieve the block **I** with 64 coefficients $i_{h,k}$, an inverse DCT operation is carried out ($S_{16}$). The Inverse DCT is expressed by the following equation:

$$i_{h,k} = \frac{1}{4} \sum_{r=0}^{7} \sum_{s=0}^{7} C(r) \, C(s) \cos\left(\frac{(2h+1)r}{16}\pi\right) \cos\left(\frac{(2k+1)s}{16}\pi\right) y_{r,s} \qquad (4)$$

with C(r), $C(s) = \frac{1}{\sqrt{2}}$ for r, s=0 and C(r), C(s)=1 otherwise

Instead of using the two index h and k, the index d is used in the rest of the description, with d taking the values d=0, ..., 63. The inverse DCT can then be written as:

$$i_{h,k} = i_d \approx \sum_{p=0}^{63} y_p \, F_{DCT_p}^d \qquad (5)$$

where

$$F_{DCT_p}^d = F_{DCT_{r,s}}^{h,k} = \frac{1}{4} C(r) \, C(s) \cos\left(\frac{(2h+1)r}{16}\right) \cos\left(\frac{(2k+1)s}{16}\right)$$

with p corresponding to (r,s) and d corresponding to (h,k).

The image can now be reconstructed ($S_{18}$) and be further processed.

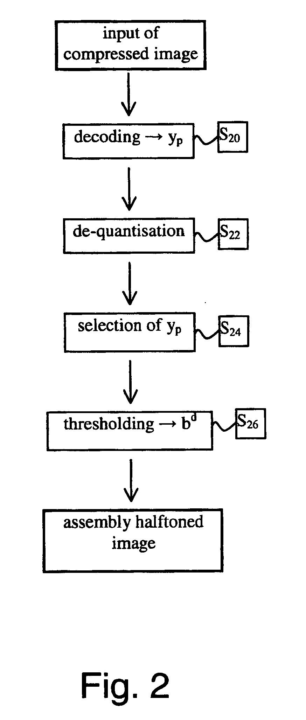

The method of generating a halftoned image from an image compressed by a domain transformation according to the invention is now explained according to the flow diagram of Fig. 2. It comprises a decoding operation ($S_{20}$) by which decoded coefficients ($y_p$) are obtained. For example, in the case of a JPEG compressed image, the DCT coefficients ($y_p$), that had been coded within a compression framework, are retrieved. Due to the 'lossy' character of quantisation, the decoded coefficients are approximately equal to the coded coefficients.

As explained above, the step ($S_{22}$) performs a de-quantisation operation, and the coefficients obtained are indicated by the same notation ($y_p$)

The method of generating a halftoned image from an image compressed by a domain transformation according to the invention comprises a thresholding operation by which a bitmap is obtained. An example of a halftoning operation is the masking method. Given an input image comprising a block **I** with $i_{h,k}$ being a pixel placed at line h, column k, and given a pixel matrix **M** of a mask, with $m_{h,k}$ being the matrix elements, the basic halftoning operation aims at creating an output bitmap matrix **B** with elements $b_{h,k}$. The thresholding operation with a mask can be written as follows:

$$\mathbf{B} = \mathbf{I} \otimes \mathbf{M}$$

with $b_{h,k}=1$ if $i_{h,k} \geq m_{h,k}$ and $b_{h,k}=0$ otherwise.

One important characteristic of the mask is its spectral property. Some masks tend to have blue noise or green noise. The common approach is to work with masks having a fixed size, and to apply a mask as non-overlapping tiles on the different parts of an image. Common mask sizes are 128×128 or 256×256 pixels.

Assuming that the mask size is 8×8, or that the 8×8 mask matrix is a portion of a mask with larger size, and using the index d instead of h and k, with d=0,... 63, the thresholding operation can now be expressed as:

$$\mathbf{B} = \mathbf{I} \otimes \mathbf{M}$$

with $b_d$=1 if $i_d \geq m_d$ and $b_d$=0 otherwise. or, almost equivalently (because of the 'lossy' rounding operation of the quantisation),

$$\mathbf{B} = \mathbf{I} \otimes \mathbf{M}$$

with $b_d$=1 if

$$i_d = \sum_{p=0}^{63} y_p \ F_{DCT_p^d} \geq m_d$$

and $b_d$=0 otherwise. According to the invention, only decoded coefficients ($y_p$) verifying a selection criterion are taken into account in the thresholding operation. Some ($y_p$) should have no significant influence on the result of the thresholding operation ($S_{26}$) done for the pixel $i_d$ by evaluating the sum $\sum_{p=0}^{63} y_p \ F_{DCT_p^d}$ and comparing it to $m_d$. Not taking into account these coefficients ($y_p$) leads to good results, with a satisfying quality for the output bitmap matrix **B** and a significant gain in processing time. $S_{24}$ is the step of selecting the coefficients according to a criterion, specifying which coefficients are taken into account in the thresholding operation.

The DC coefficient $y_0$ is important since it gives the mean tone of the block, and is preferably taken into account in the thresholding operation, with can also be expressed by the inequation:

$$\sum_{p=1}^{63} y_p \ F_{DCT_p^d} \geq m_d - y_0 \qquad\qquad (6)$$

The DC coefficient $y_0$ is selected and to make the selection ($S_{24}$) of the other coefficients ($y_p$) it is preferred to take into account only the AC coefficients ($y_p$) of which the absolute value is equal to or larger than a pre-determined value LIM. For example, the coefficients with value -1 or 1 will not change the result of the thresholding operation as much as the coefficients with values 8 or -14.

The pre-determined value of LIM may be a fixed value for all images. It may also be a value that can be determined by the user and entered to by means of a user interface. It is also possible to determine the value of LIM adaptatively. In this adaptive mode, the so-called energy of a block, being for example the sum of all AC coefficients ($y_p$), is calculated for each block. The value of LIM may be a function of the calculated block energy.

In order to increase further the processing speed for generating a halftoned image, some parts of the elements used in the thresholding operation can be pre-calculated, like for example the right part ($m_d$-$y_0$) of the inequation and the elements $y_p \ F_{DCT_p^d}$. These elements can be put in a memory in the form of a table.

It is also possible to enhance the edges of an image within the frame of the method of generating a halftoned image from an image compressed by a domain transformation according to the invention. This has the advantage that noise on the halftoning of lines is significantly reduced. After having obtained the decoded coefficients ($y_p$), the left part of the inequation used for the thresholding operation is multiplied by a factor $\alpha$, which can be a fixed factor, or be chosen by the user, or be determined by an adaptive mode in a same way as explained above for LIM. The inequation used for the thresholding operation is then expressed as:

$$\sum_{p=1}^{63} \alpha \; y_p \; F_{DCT_p}^{d} \geq m_d - y_0 \qquad\qquad (7)$$

.

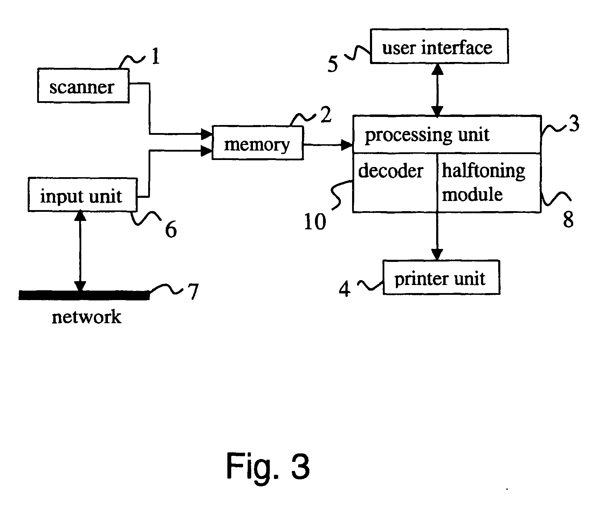

Fig. 3 shows a diagrammatic representation of the most important parts of a digital printer to which the invention as described above is applied.

Referring to Fig. 3, this apparatus is provided with a user interface 5 and an input unit 6 for receiving digital images made elsewhere, e.g. via a network 7, so that the apparatus is used as printer.

The apparatus is also provided with a scanner 1 having a device for converting a recorded image to a digital image, a memory 2 for storing the digital image, for example a compressed JPEG image, a processing unit 3 for processing the digital image and a printing unit 4 for printing the processed digital image on paper or any suitable medium. For printing digital colour images, the printing unit 4 contains a number of colour printing sub-units, each printing a basis colour. For example four colour printing sub-units can use the basis colorants cyan, yellow, magenta and black in the form of ink or toner.

Colours are rendered with halftoning techniques such as masking or error diffusion methods.

The input image originating from the scanner 1 or the input unit 5 is a continuous-tone image or a colour image. In the case of a colour image, each colour plane is a continuous-tone image and is independently transformed into a bitmap using the method according to the invention. In order to perform the halftoning operation, the processing unit 3 is provided with a decoder 10 for performing a decoding operation by which decoded coefficients ($y_p$) are obtained and a halftoning module 8 for performing a thresholding operation according to the invention.

The processing unit 3 is connected to the operating unit 5, being a user interface. The operator interface 5 comprises selection means and may possibly be provided with setting means for setting some parameters of the halftoning function, for example by means of a slide or button. For example, the parameters $\alpha$ could be chosen when it is desired to enhance the edges of an image and to reduce the noise on the halftoning of the lines. In memory 2, it is possible to store some pre-calculated elements used in the thresholding operation.

When the invention is used in a printer in a network environment, the user can, for example, indicate by means of the printer driver at his workstation that a chosen image must be halftoned with chosen parameters. In that case, a processing device in the printer generates a halftone image from a compressed image, and prints the converted image.

It is also possible to carry out the halftoning operation in a separate computer, for example the workstation of a user, and then send the halftoned digital image to a printer or store it in a mass memory.

**Claims**

1. Method of generating a halftoned image from an image compressed by a domain transformation yielding coefficients for resulting domain components and by a coding operation by which said coefficients are coded, comprising a decoding operation ($S_{20}$) by which decoded coefficients ($y_p$) are obtained and a thresholding operation ($S_{26}$) by which a bitmap is obtained, **characterised in that** partly retrieved input pixel values are used for the purpose of the thresholding operation ($S_{26}$), whereby only decoded coefficients ($y_p$) verifying a selection criterion are taken into account to obtain the partly retrieved input pixel values, the selection criterion being related to the absolute value of each of the decoded coefficient ($y_p$).

2. Method of generating a halftoned image according to claim 1, **characterised in that** the decoded coefficients ($y_p$) are discrete cosine transform (DCT) coefficients.

3. Method of generating a halftoned image according to claim 2, **characterised in that** the decoded coefficients ($y_p$) selected for the thresholding operation ($S_{26}$) are the DC coefficient ($y_0$) and only the AC coefficients in absolute value equal to or larger than a pre-determined value LIM.

4. Method of generating a halftoned image according to claim 2 or 3, **characterised in that** elements used in the thresholding operation are pre-calculated.

5. Method of generating a halftoned image according to any of the preceding claims, **characterised in that** the decoded coefficients ($y_p$) are obtained using a Huffman decoder.

6. Method of generating a halftoned image according to any of the preceding claims, **characterised in that** the decoded

coefficients ($y_p$) selected for partly retrieving input pixel values are multiplied by an amplification factor $\alpha$ for the purpose of the thresholding operation ($S_{26}$).

**7.** Apparatus for generating a halftoned image from an image compressed by a domain transformation yielding coefficients for resulting domain components and by a coding operation by which said coefficients are coded, comprising a decoder (10) for performing
a decoding operation by which decoded coefficients ($y_p$) are obtained and a halftoning module (8) for performing a thresholding operation by which a bitmap is obtained, the apparatus being provided with a memory (2) for storing a digital compressed image and a processing unit (3) for processing digital data, **characterised in that** the halftoning module (8) uses partly retrieved input pixel values in the thresholding operation, whereby only decoded coefficients ($y_p$) verifying a selection criterion are taken into account to obtain the partly retrieved input pixel values, the selection criterion being related to the absolute value of each of the decoded coefficient ($y_p$).

**8.** Apparatus for generating a halftoned image according to claim 7, **characterised in that** the decoder (10) is a Huffman decoder.

**9.** Apparatus for generating a halftoned image according to claim 7 or 8, **characterised in that** the apparatus is provided with a memory (2) for storing pre-calculated elements used in the thresholding operation

**10.** Computer program with a program code for generating a halftoned image from an image compressed by a domain transformation in accordance with the method of any of the claims 1-6, when the program is performed in a computer

**11.** Computer program product comprising computer software in accordance with claim 10, stored on a machine readable storage medium.

**12.** Printer provided with a network connection unit (7) for receiving externally generated print orders, a processing unit (3) for processing digital image data and a printing unit (4), **characterised in that** the printer is provided with an apparatus according to any of the claims 7-9.


**Patentansprüche**

**1.** Verfahren zum Erzeugen eines gerasterten Bildes aus einem Bild, das durch eine Definitionsbereichstransformation, welche Koeffizienten für resultierende Definitionsbereichskomponenten liefert, und durch eine Kodierungsoperation, durch welche die besagten Koeffizienten kodiert werden, komprimiert ist, wobei das Verfahren aufweist:

eine Dekodierungsoperation ($S_{20}$), durch die dekodierte Koeffizienten ($y_p$) erhalten werden,
und eine Schwellwertoperation ($S_{26}$), durch die eine Bitmap erhalten wird, **dadurch gekennzeichnet, daß** teilweise wiedergewonnene Eingabepixelwerte für den Zweck der Schwellwertoperation ($S_{26}$) verwendet werden, mittels welcher nur dekodierte Koeffizienten ($y_p$), die ein Auswahlkriterium erfüllen, zum Erhalten der teilweise wiedergewonnenen Eingabepixelwerte berücksichtigt werden, wobei das Auswahlkriterium auf den Absolutwert jedes der dekodierten Koeffizienten ($y_p$) bezogen ist.

**2.** Verfahren zum Erzeugen eines gerasterten Bildes nach Anspruch 1, **dadurch gekennzeichnet, daß** die dekodierten Koeffizienten ($y_p$) diskrete Kosinustransformations-(DCT)-Koeffizienten sind.

**3.** Verfahren zum Erzeugen eines gerasterten Bildes nach Anspruch 2, **dadurch gekennzeichnet, daß** die für die Schwellwertoperation ($S_{26}$) ausgewählten dekodierten Koeffizienten ($y_p$) der DC-Koeffizient ($y_0$) und lediglich diejenigen AC-Koeffizienten mit Absolutwert größer oder gleich einem vorbestimmten Wert LIM sind.

**4.** Verfahren zum Erzeugen eines gerasterten Bildes nach Anspruch 2 oder 3, **dadurch gekennzeichnet, daß** in der Schwellwertoperation verwendete Elemente vorberechnet sind.

**5.** Verfahren zum Erzeugen eines gerasterten Bildes nach einem der vorstehenden Ansprüche, **dadurch gekennzeichnet, daß** die dekodierten Koeffizienten ($y_p$) unter Verwendung eines Huffman-Dekoders erhalten werden.

**6.** Verfahren zum Erzeugen eines gerasterten Bildes nach einem der vorstehenden Ansprüche, **dadurch gekennzeichnet, daß** die zum teilweisen Wiederherstellen von Eingabepixelwerten ausgewählten dekodierten Koeffizienten

($y_p$) für den Zweck der Schwellwertoperation ($S_{26}$) mit einem Vergrößerungsfaktor $\alpha$ multipliziert werden.

**7.** Vorrichtung zum Erzeugen eines gerasterten Bildes aus einem Bild, das mittels einer Definitionsbereichstransformation, welche Koeffizienten für resultierende Definitionsbereichskomponenten liefert, und mittels eine Kodierungsoperation, durch die die besagten Koeffizienten kodiert werden, komprimiert ist,
mit einem Dekoder (10) zum Durchführen einer Dekodierungsoperation, durch die dekodierte Koeffizienten ($y_p$) erhalten werden,
und mit einem Rasterungsmodul (8) zum Durchführen einer Schwellwertoperation, durch welche eine Bitmap erhalten wird, wobei die Vorrichtung mit einem Speicher (2) zum Speichern eines digitalen komprimierten Bildes und einer Verarbeitungseinheit (3) zum Verarbeiten von digitalen Daten versehen ist, **dadurch gekennzeichnet, daß** das Rasterungsmodul (8) teilweise wiedergewonnene Eingabepixelwerte in der Schwellwertoperation verwendet, mittels der nur dekodierte Koeffizienten ($y_p$), welche ein Auswahlkriterium erfüllen, berücksichtigt werden, um die teilweise wiedergewonnenen Eingabepixelwerte zu erhalten, wobei das Auswahlkriterium auf dem Absolutwert jedes der dekodierten Koeffizienten ($y_p$) bezogen ist.

**8.** Vorrichtung zum Erzeugen eines gerasterten Bildes nach Anspruch 7, **dadurch gekennzeichnet, daß** der Dekoder (10) ein Huffman-Dekoder ist.

**9.** Vorrichtung zum Erzeugen eines gerasterten Bildes nach Anspruch 7 oder 8, **dadurch gekennzeichnet, daß** die Vorrichtung mit einem Speicher (2) zum Speichern von in der Schwellwertoperation verwendeten vorberechneten Elementen versehen ist.

**10.** Computerprogramm mit einem Programmcode zum Erzeugen eines gerasterten Bildes aus einem Bild, das durch eine Definitionsbereichstransformation komprimiert ist, nach dem Verfahren nach einem der Ansprüche 1 bis 6, wenn das Programm in einem Computer ausgeführt wird.

**11.** Computerprogrammprodukt, welches Computersoftware nach Anspruch 10 aufweist, gespeichert auf einem maschinenlesbaren Speichermedium.

**12.** Drucker, insbesondere Tintenstrahldrucker, versehen mit einer Netzwerkverbindungseinheit (7) zum Empfangen von extern generierten Druckaufträgen, einer Verarbeitungseinheit (3) zum Verarbeiten digitaler Bilddaten und einer Druckeinheit (4), **dadurch gekennzeichnet, daß** der Drucker mit einer Vorrichtung nach einem der Ansprüche 7 bis 9 versehen ist.

## Revendications

**1.** Procédé de génération d'une image tramée à partir d'une image comprimée par une transformation de domaine permettant d'obtenir des coefficients pour des composantes de domaines résultantes et par une opération de codage au moyen de laquelle lesdits coefficients sont codés, comprenant une opération de décodage ($S_{20}$) au moyen de laquelle on obtient des coefficients décodés ($y_p$) et une opération de seuillage ($S_{26}$) au moyen de laquelle on obtient une grille de points, **caractérisé en ce que** des valeurs de pixel d'entrée partiellement récupérées sont utilisées pour l'opération de seuillage ($S_{26}$), où seuls les coefficients décodés ($y_p$) vérifiant un critère de sélection sont pris en compte pour obtenir les valeurs de pixel d'entrée partiellement récupérées, le critère de sélection étant lié à la valeur absolue de chacun des coefficients décodés ($y_p$).

**2.** Procédé de génération d'une image tramée selon la revendication 1, **caractérisé en ce que** les coefficients décodés ($y_p$) sont des coefficients de transformée en cosinus discrète (TCD).

**3.** Procédé de génération d'une image tramée selon la revendication 2, **caractérisé en ce que** les coefficients décodés ($y_p$) sélectionnés pour l'opération de seuillage ($S_{26}$) sont le coefficient DC ($y_0$) et uniquement les coefficients AC en valeur absolue égale ou supérieure à une valeur LIM prédéterminée.

**4.** Procédé de génération d'une image tramée selon la revendication 2 ou 3, **caractérisé en ce que** les éléments utilisés dans l'opération de seuillage sont pré-calculés.

**5.** Procédé de génération d'une image tramée selon l'une quelconque des revendications précédentes, **caractérisé en ce que** l'on obtient les coefficients décodés ($y_p$) en utilisant un décodeur de Huffman.

**6.** Procédé de génération d'une image tramée selon l'une quelconque des revendications précédentes, **caractérisé en ce que** les coefficients décodés ($y_p$) sélectionnés pour récupérer partiellement les valeurs de pixel d'entrée sont multipliés par un facteur d'amplification $\alpha$ pour l'opération de seuillage ($S_{26}$).

**7.** Appareil pour la génération d'une image tramée à partir d'une image comprimée par une transformation de domaine permettant d'obtenir des coefficients pour des composantes de domaines résultantes et par une opération de codage au moyen de laquelle lesdits coefficients sont codés, comprenant un décodeur (10) permettant d'effectuer une opération de décodage au moyen de laquelle on obtient des coefficients décodés ($y_p$) et un module de tramage (8) permettant de réaliser une opération de seuillage au moyen de laquelle on obtient une grille de points, l'appareil étant constitué d'une mémoire (2) permettant de stocker une image numérique comprimée et une unité centrale (3) permettant de traiter des données numériques, **caractérisé en ce que** le module de tramage (8) utilise des valeurs de pixel d'entrée partiellement récupérées dans l'opération de seuillage, où seuls les coefficients décodés ($y_p$) vérifiant un critère de sélection sont pris en compte pour obtenir les valeurs de pixel d'entrée partiellement récupérées, le critère de sélection étant lié à la valeur absolue de chacun des coefficients décodés ($y_p$).

**8.** Appareil pour la génération d'une image tramée selon la revendication 7, **caractérisé en ce que** le décodeur (10) est un décodeur de Huffman.

**9.** Appareil pour la génération d'une image tramée selon la revendication 7 ou 8, **caractérisé en ce que** l'appareil est composé d'une mémoire (2) permettant de stocker des éléments pré-calculés utilisés dans l'opération de seuillage.

**10.** Programme d'ordinateur avec un code de programme permettant de générer une image tramée à partir d'une image comprimée par une transformation de domaine selon le procédé de l'une quelconque des revendications 1-6, lorsque le programme est réalisé dans un ordinateur.

**11.** Produit programme d'ordinateur comprenant un logiciel d'ordinateur selon la revendication 10, stocké sur un support de stockage exploitable par une machine.

**12.** Imprimante, plus particulièrement, imprimante à jet d'encre munie d'une unité de connexion au réseau (7) permettant de recevoir des ordres d'impression extérieurs, une unité centrale (3) permettant de traiter des données d'image numériques et une unité d'impression (4), **caractérisée en ce que** l'imprimante comprend un appareil selon l'une quelconque des revendications 7-9.

**COMPRESSION**

**DECOMPRESSION**

Input image

Retrieved image

Partition
8×8 pixel blocks
→ $i_{h,k}$

$S_2$

Reconstruction
image from
8×8 blocks

$S_{18}$

Discrete Cosine
Transform
→ $y_{r,s}$

$S_4$

Inverse Discrete
Cosine Transform
→ $i_{h,k}$

$S_{16}$

Quantisation

$S_6$

de-quantisation → $y_{r,s}$

$S_{14}$

Statistical
encoder

$S_8$

Statistical
decoder

$S_{12}$

Compressed
image

# Fig. 1

input of
compressed image

decoding → $y_p$ — S$_{20}$

de-quantisation — S$_{22}$

selection of $y_p$ — S$_{24}$

thresholding → $b^d$ — S$_{26}$

assembly halftoned
image

Fig. 2

Fig. 3